# EUROPEAN PATENT APPLICATION

(11) **EP 2 927 449 A1**
(43) Date of publication of application: **07.10.2015**
(21) Application number: 12889459.9
(22) Date of filing: 03.12.2012
(51) Int. Cl.: F01N 3/20, F01N 3/18, F02P 19/02

(54) **DEVICE AND METHOD FOR CONTROLLING OPERATION OF INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: TSUJIMOTO, Kenichi, Toyota-shi Aichi 471-8571 (JP); MORISHIMA, Akinori, Toyota-shi Aichi 471-8571 (JP); NUMATA, Yoshiki, Toyota-shi Aichi 471-8571 (JP)
(74) Representative: Smith, Samuel Leonard
(86) International application number: PCT/JP2012/007742
(87) International publication number: WO 2014/087444

(57) **Abstract**

There is provided an operation control method for an internal combustion engine according to the present invention, in which if an exhaust gas purifier (17) needs to be warmed, a second glow plug (26b) is heated in an exhaust passage (25a) upstream of the exhaust gas purifier to a fuel ignition temperature or higher while fuel supplied to the exhaust passage is ignited and burned. In this method, if it is determined that both of the exhaust gas purifier and an internal combustion engine (10) need to be warmed, a first glow plug (16) disposed in a combustion chamber (10a) of the internal combustion engine is first heated to a predetermined temperature prior to the warm-up of the exhaust gas purifier to start the warm-up of the internal combustion engine, and then the second glow plug begins to be heated when the temperature of the exhaust gas purifier is equal to or higher than a glow plug energization starting temperature (T_{CM}) which is lower than a warm-up start determination temperature (T_{CL}) of the exhaust gas purifier.

## Description

### Technical Field

The present invention relates to an operation control apparatus and a method in which the amount of HC, CO, or the like included in exhaust gas emitted from a compression ignition type internal combustion engine can be suppressed.

### Background Art

In recent years, for complying with strict exhaust gas regulations applied to an internal combustion engine, it is necessary to activate an exhaust gas purifier at the time of starting up, or to maintain the exhaust gas purifier in an active state during the operation of the internal combustion engine. To this end, Patent Literature 1 and others have proposed an internal combustion engine in which an exhaust gas heating device is incorporated in an exhaust passage upstream of the exhaust gas purifier. The exhaust gas heating device promotes activation of the exhaust gas purifier, or maintains the active state thereof by supplying a heated gas generated in the exhaust gas to the exhaust gas purifier disposed downstream thereof. For this purpose, the exhaust gas heating device is generally provided with a glow plug (hereinafter referred to as an exhaust glow plug) for generating the heated gas by heating and igniting the fuel, and a fuel supply valve for injecting the fuel toward the exhaust glow plug.

### Citation List

### Patent Literature

PTL 1: Japanese Patent Laid-Open No. 2012-107634
PTL 2: Japanese Patent Laid-Open No. 2007-64164

### Summary of Invention

### Technical Problem

To reduce the amount of HC and CO included in exhaust gas from the internal combustion engine, an oxidation catalytic converter is usually incorporated into the exhaust gas purifier. In order for the oxidation catalytic converter to carry out the purification function for HC and CO, the temperature of the oxidation catalytic converter needs to be equal to or higher than its activation temperature (for example, 150°C). Therefore, in a case where the oxidation catalytic converter is in a non-active state, it is desired that the oxidation catalytic converter be activated promptly and efficiently. Particularly in cold start of the internal combustion engine, however, the temperature of the exhaust gas from the internal combustion engine is low and an air-fuel ratio tends to be rich. As a result, it is difficult to use the above-mentioned exhaust gas heating device.

As another method for reducing the amount of HC and CO included in exhaust gas, so-called afterglow control is known, as disclosed in Patent Literature 2. In this method, a glow plug (hereinafter referred to as an in-cylinder glow plug) disposed in a cylinder of the internal combustion engine continues to be heated even after start of the internal combustion engine, whereby ignition quality and combustibility of fuel are increased and the amount of HC and CO included in the exhaust gas from the internal combustion engine is reduced.

The inventors of the present invention have intended to build a system capable of reducing the amount of HC and CO included in the exhaust gas emitted to the outside of a vehicle even in the cold start of the internal combustion engine by combining the afterglow control and the above-mentioned exhaust gas heating device. However, it has been found that simply combining these techniques increases power consumption for the in-cylinder glow plug and the exhaust glow plug, causing shortage of power supplied to other auxiliaries or poor fuel efficiency due to driving of a generator.

An object of the present invention is to provide an operation control apparatus and a method capable of suppressing power consumption of an in-cylinder glow plug or an exhaust glow plug while minimizing the amount of HC, CO, or the like included in exhaust gas particularly in cold start of an internal combustion engine.

### Solution to Problem

According to a first aspect of the present invention, an operation control apparatus for an internal combustion engine comprises: a fuel injection valve for injecting fuel into a combustion chamber of a compression ignition type internal combustion engine; a first glow plug disposed in the combustion chamber of the internal combustion engine to expedite ignition and burning of the fuel injected into the combustion chamber from the fuel injection valve; an engine warm-up parameter acquisition means for acquiring a parameter associated with whether the internal combustion engine needs to be warmed; an engine warm-up determination means for determining whether the internal combustion engine needs to be warmed by comparing the parameter acquired by the engine warm-up parameter acquisition means and a preset engine warm-up determination parameter; an exhaust gas purifier disposed in an exhaust passage into which exhaust gas from the internal combustion engine is introduced; a fuel supply valve for supplying fuel to the exhaust passage upstream of the exhaust gas purifier; a second glow plug disposed in the exhaust passage downstream of the fuel supply valve to cause the fuel supplied from the fuel supply valve to the exhaust passage to ignite and burn; a catalyst temperature acquisition means for acquiring a temperature of a catalytic converter incorporated into the exhaust gas purifier; a catalyst warm-up determination means for determining whether the catalytic converter needs to be warmed by comparing the temperature of the catalytic converter acquired by the catalyst temperature acquisition means and a preset catalyst warm-up determination temperature; and a control means for controlling each of an actuation of the fuel injection valve, an actuation of the fuel supply valve, a period of time in which the first glow plug is energized, and a period of time in which a second glow plug is energized based on determination results obtained by the engine warm-up determination means and the catalyst warm-up determination means, wherein the engine warm-up determination parameter is set in a manner corresponding to a temperature lower than the catalyst warm-up determination temperature so that if it is determined that both of the engine warm-up determination means and the catalyst warm-up determination means need to be warmed, the energization of the first glow plug starts prior to the energization of the second glow plug; the control means includes a second glow energizing start determination means for determining an energization start time of the second glow plug by comparing the temperature of the catalytic converter acquired by the catalyst temperature acquisition means and a preset second glow plug heating start determination temperature; and the second glow plug heating start determination temperature is set in a manner corresponding to a temperature higher than the engine warm-up determination parameter and lower than the catalyst warm-up determination temperature.

According to the present invention, since the temperature of the catalytic converter of the exhaust gas purifier is low immediately after the start of the internal combustion engine, cleaning performance of the catalytic converter stays low. In this state, therefore, afterglow control which uses energization of the in-cylinder glow plug can more efficiently reduce the amount of HC and CO. However, if the temperature of the catalytic converter increases to a temperature near an activation temperature, HC and CO can be cleaned up efficiently with less power consumption by using the catalytic converter heated by the exhaust gas heating device than by continuing the afterglow control.

The operation control apparatus for an internal combustion engine according to the first aspect of the present invention may further comprise: a second glow plug temperature acquisition means for acquiring a temperature of the second glow plug, wherein the control means finishes the energization of the first glow plug if the engine warm-up determination means determines that the warm-up of the internal combustion engine is finished or if the temperature of the second glow plug acquired by the second glow plug temperature acquisition means is equal to or higher than a fuel ignition temperature.

The operation control apparatus for an internal combustion engine according to the first aspect of the present invention may further comprise: an exhaust flow acquisition means for acquiring a flow rate of exhaust gas flowing in the exhaust passage, wherein the control means further includes a means for correcting the second glow plug heating start determination temperature to a higher point so that as the flow rate of the exhaust gas acquired by the exhaust flow acquisition means increases, an energization start time of the second glow plug is delayed.

According to a second aspect of the present invention, an operation control method for an internal combustion engine, the method comprises the steps of: (a) acquiring a parameter associated with whether an internal combustion engine needs to be warmed; (b) determining whether the internal combustion engine needs to be warmed by comparing the parameter acquired in the step (a) and a preset engine warm-up determination parameter; (c) heating a first glow plug disposed in a combustion chamber of the internal combustion engine to a predetermined temperature if it is determined that the internal combustion engine needs to be warmed in the step (b); (d) injecting fuel into the combustion chamber to cause the fuel to ignite and burn if the temperature of the first glow plug is equal to or higher than the predetermined temperature; (e) acquiring a temperature of a catalytic converter of an exhaust gas purifier disposed in an exhaust passage into which exhaust gas from the internal combustion engine is introduced; (f) determining whether the catalytic converter needs to be warmed by comparing the temperature of the catalytic converter acquired in the step (e) and a preset catalyst warm-up determination temperature; (g) heating a second glow plug disposed in the exhaust passage upstream of the exhaust gas purifier if it is determined that the catalytic converter needs to be warmed in the step (f) ; and (h) injecting fuel into the exhaust passage to cause the fuel to ignite and burn by using the second glow plug if the temperature of the second glow plug is equal to or higher than a fuel ignition temperature, wherein if it is determined that a warm-up is needed in both of the steps (b) and (f), the engine warm-up determination parameter is set in a manner corresponding to a temperature lower than the catalyst warm-up determination temperature so that the steps (c) and (d) are performed prior to the steps (g) and (h); and the step (g) includes determining a start time of the heating of the second glow plug by comparing the temperature of the catalytic converter acquired in the step (e) and a preset second glow plug heating start determination temperature, the second glow plug heating start determination temperature being set in a manner corresponding to a temperature higher than the engine warm-up determination parameter and lower than the catalyst warm-up determination temperature.

In the operation control method for an internal combustion engine according to the second aspect of the present invention, the step (c) may end if a determination result in the step (b) is that the warm-up of the internal combustion engine is finished or if the temperature of the second glow plug is equal to or higher than a fuel ignition temperature in the step (g).

The step (c) may end after the step (h) starts.

The operation control method for an internal combustion engine according to the second aspect of the present invention may further comprise the steps of: (i) acquiring a flow rate of exhaust gas flowing in the exhaust passage; and (j) correcting the exhaust glow plug heating start determination temperature to a higher point so that as the flow rate of the exhaust gas acquired in the step (i) increases, a heating start time of the exhaust glow plug determined in the step (g) is delayed.

### Advantageous Effects of Invention

According to the present invention, power consumption can be suppressed by making a period of time in which the in-cylinder glow plug is energized and a period of time in which the exhaust glow plug is energized partly overlap each other. In addition, for a period of time until the temperature of the catalytic converter actually reaches an activation temperature after the exhaust glow plug is turned on, the amount of HC and CO included in exhaust gas can be suppressed through the afterglow control.

If warm-up of the internal combustion engine is finished or if the temperature of the exhaust glow plug is equal to or higher than a fuel ignition temperature, the energization of the in-cylinder glow plug is finished so that increase in power consumption due to the afterglow control can be suppressed.

If the energization of the in-cylinder glow plug is finished after supplying fuel to the exhaust passage, for a period of time until the temperature of the catalytic converter actually reaches an activation temperature after the exhaust glow plug is turned on, it is possible to effectively employ the afterglow control.

An exhaust glow plug heating start determination temperature is corrected to a higher point such that as the flow rate of the exhaust gas flowing in the exhaust passage increases, a time at which the energization of the exhaust glow plug starts is delayed. Accordingly, it is possible to avoid wasted power consumption for the exhaust glow plug.

### Brief Description of Drawings

[Fig. 1] Fig. 1 is an outline diagram showing a system in an embodiment in which the present invention is applied to a vehicle mounting an internal combustion engine of a compression ignition type thereon;
[Fig. 2] Fig. 2 is a control block diagram of a primary portion in the embodiment shown in Fig. 1;
[Fig. 3] Fig. 3 is a timing diagram schematically showing the relationship among a period of time in which an in-cylinder glow plug is energized, a period of time in which an exhaust glow plug is energized, and a period of time in which fuel is supplied in the embodiment shown in Fig. 1;
[Fig. 4A] Fig. 4A is a flow chart showing an exhaust heating procedure in the embodiment shown in Fig. 1 along with Fig. 4B;
[Fig. 4B] Fig. 4B is a flow chart showing an exhaust heating procedure in the embodiment shown in Fig. 1 along with Fig. 4A; and
[Fig. 5] Fig. 5 is a flow chart showing details of subroutines for resetting flags.

### Description of Embodiments

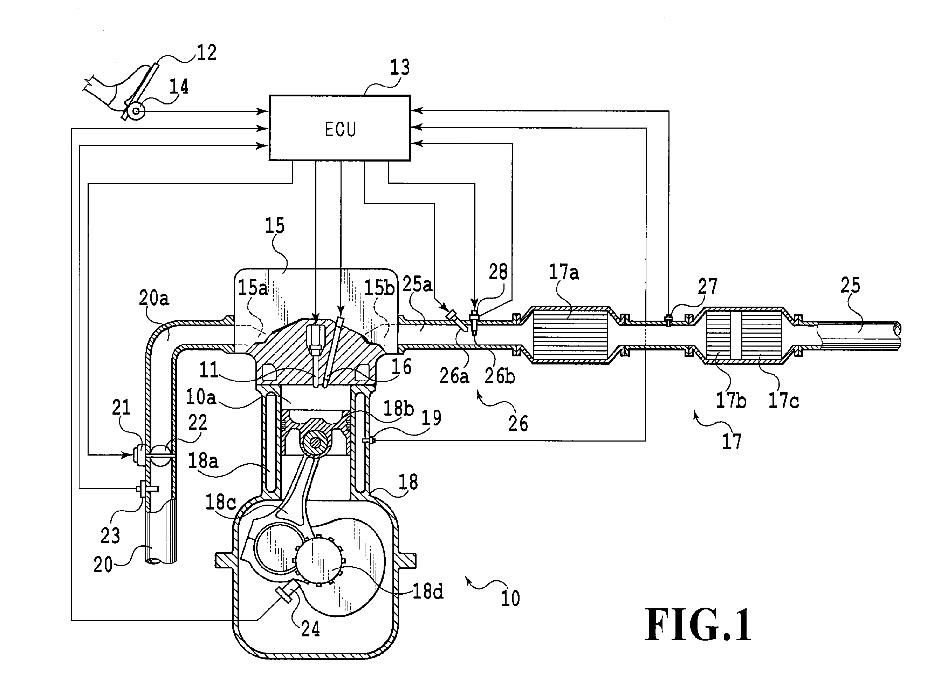

An embodiment in which the present invention is applied to a vehicle having a compression ignition type multi-cylinder internal combustion engine mounted thereon will be explained in detail with reference to Figs. 1 to 5. The present invention is not, however, limited to this embodiment, and its configuration can be changed freely according to the characteristics required.

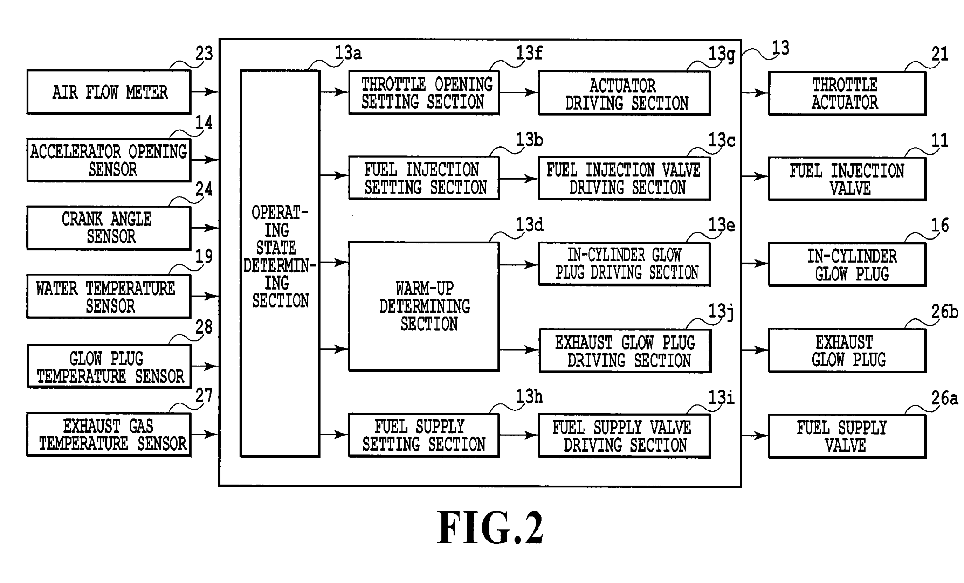

Fig. 1 schematically shows a primary portion of an engine system in the present embodiment, and Fig. 2 schematically shows a control block of the primary portion. In Fig. 1, in addition to a valve-operating mechanism for intake and exhaust in an engine 10 and a muffler, an exhaust turbo-charger, an EGR system, and the like which are generally provided as auxiliaries for the engine 10 are omitted. It should also be noted that some of various sensors needed for a smooth operation of the engine 10 are also omitted for convenience.

The engine 10 in the embodiment is a multi-cylinder internal combustion engine of a self-ignition system which produces spontaneous ignition by directly injecting light oil as fuel from a fuel injection valve 11 into a combustion chamber 10a in a compression state.

The amount and the injection timing of the fuel fed into the combustion chamber 10a from the fuel injection valve 11 are controlled by an ECU (Electronic Control Unit) 13 based on the position of an accelerator pedal 12 depressed by a driver and an operating state of the vehicle. The position of the accelerator pedal 12 is detected by an accelerator opening sensor 14, and the detection information is outputted to the ECU 13 for use in setting the injection amount of the fuel from the fuel injection valve 11 or the like.

The ECU 13 of the present invention as a control unit includes an operating state determining section 13a for determining the operating state of the vehicle based on the information from this accelerator opening sensor 14, various sensors which will be described later, and the like, a fuel injection setting section 13b, and a fuel injection valve driving section 13c. The fuel injection setting section 13b sets, based on the determination result by the operating state determining section 13a, the injection amount and the injection timing of fuel from the fuel injection valve 11. The fuel injection valve driving section 13c controls the operation of the fuel injection valve 11 so that the fuel in an amount set by the fuel injection setting section 13b is injected from the fuel injection valve 11 at the set timing.

A valve-operating mechanism (not shown) is incorporated in a cylinder head 15 including an intake port 15a and an exhaust port 15b disposed in the combustion chamber 10a. The fuel injection valve 11, as well as an in-cylinder glow plug 16 as a first glow plug of the present invention, is also incorporated in the cylinder head 15.

The in-cylinder glow plug 16 for igniting the fuel injected from the fuel injection valve 11 into the combustion chamber 10a in the cold start of the engine 10 is connected to a power source (not shown) mounted on a vehicle via a warm-up determining section 13d and an in-cylinder glow plug driving section 13e in the ECU 13.

The warm-up determining section 13d in the ECU 13 determines both whether the engine 10 needs to be warmed and whether an exhaust gas purifier 17 needs to be warmed, which will be described later. In a cylinder block 18, a water temperature sensor 19 for detecting a temperature T_{W} of a coolant flowing through a water jacket 18a formed therein and outputting the detected temperature to the ECU 13 is incorporated as an engine warm-up parameter acquisition means. According to a determination result obtained by the warm-up determining section 13d, the in-cylinder glow plug driving section 13e switches between energization and deenergization of the in-cylinder glow plug 16. More specifically, if the water temperature T_{W} is equal to or lower than a predetermined warm-up necessity determination temperature T_{WL}, for example, 50°C or lower, the warm-up determining section 13d determines that the engine 10 needs to be warmed, and the in-cylinder glow plug driving section 13e starts the energization of the in-cylinder glow plug 16. That is, the warm-up necessity determination temperature T_{WL} corresponds to the engine warm-up determination parameter of the present invention. Meanwhile, if the water temperature T_{W} is equal to or higher than a predetermined warm-up completion determination temperature T_{WH}, for example, 80°C or higher, the warm-up determining section 13d determines that the engine 10 does not need to be warmed, and the in-cylinder glow plug driving section 13e stops the energization of the in-cylinder glow plug 16.

As described above, in the present embodiment, the water temperature T_{W} is employed as a parameter associated with whether the internal combustion engine needs to be warmed. It is also possible to adopt a temperature of an engine oil for this parameter.

In an intake pipe 20 being connected to the cylinder head 15 in such a manner as to be communicated with the intake port 15a and defining an intake passage 20a together with the intake port 15a, a throttle valve 22 is incorporated for adjusting an opening of the intake passage 20a through a throttle actuator 21. In addition, an airflow meter 23 is mounted to the intake pipe 20 upstream of the throttle valve 22 for detecting a flow rate of intake air flowing in the intake passage 20a, which is outputted to the ECU 13.

The ECU 13 further includes a throttle opening setting section 13f and a throttle valve driving section 13g. The throttle opening setting section 13f sets an opening of the throttle valve 22 based upon a determination result obtained in the above-mentioned operating state determining section 13a. The throttle valve driving section 13g controls the actuation of the throttle actuator 21 in such a manner that the throttle valve 22 opens to an opening degree set in the throttle opening setting section 13f.

The cylinder block 18 in which a piston 18b reciprocates is provided with a crank angle sensor 24 mounted thereon for detecting a rotational phase of a crank shaft 18d connected through a connecting rod 18c to the piston 18b, that is, a crank angle thereof, which is outputted to the ECU 13. The operating state determining section 13a in the ECU 13 obtains in real time the rotational phase of the crank shaft 18d, an engine rotational speed, and the like, based upon information from the crank angle sensor 24.

In an exhaust pipe 25 being connected to the cylinder head 15 in such a manner as to be communicated with the exhaust port 15b and defining an exhaust passage 25a together with the exhaust port 15b, an exhaust gas heating device 26 and the above-mentioned exhaust gas purifier 17 are disposed in order from upstream to downstream.

The exhaust gas purifier 17 designed to make harmful substance produced by the combustion of an air-fuel mixture inside of the combustion chamber 10a harmless in the present embodiment includes a DOC (Diesel Oxidation Catalyst) 17a, a DPF (Diesel Particulate Filter) 17b, and an NSR (NOₓ Storage-Reduction) catalytic converter 17c. The converters and the filter are arranged along the exhaust passage 25a in order from upstream to downstream. A well-known configuration other than that of the exhaust gas purifier 17 in the present embodiment may be appropriately adopted. To the exhaust passage 25a between the DOC 17a and the DPF 17b, an exhaust gas temperature sensor 27 for detecting a temperature T_{E} of exhaust gas, which is outputted to the ECU 13, is incorporated to obtain a bed temperature T_{C} of the NSR catalytic converter 17c so as to output the resultant detection information to the ECU 13. More specifically, the exhaust gas temperature sensor 27 of the present embodiment, together with the above-mentioned airflow meter 23, serves as a catalyst temperature acquisition means in the present invention. The warm-up determining section 13d in the ECU 13 estimates the bed temperature T_{C} of the NSR catalytic converter 17c based on the information from the exhaust gas temperature sensor 27 and the airflow meter 23 and determines whether the exhaust gas purifier 17 needs to be warmed. Basically, if it is determined that the catalyst bed temperature T_{C} is equal to or lower than a warm-up start determination temperature T_{CL} of the NSR catalytic converter 17c corresponding to a catalyst warm-up determination temperature in the present invention, for example, 180°C or lower, it is determined that the exhaust gas purifier 17 needs to be warmed. It should be noted that a method for estimating a catalyst bed temperature T_{C} from an exhaust gas temperature T_{E} and a flow rate of exhaust gas is well known, with which the ECU 13 can continuously calculate the catalyst bed temperature T_{C} based on a specific heat, a thermal conductivity, and the like of the DPF 17b and the NSR catalytic converter 17c. In this case, detecting also the temperature of exhaust gas flowing in the exhaust passage 25a downstream of the NSR catalytic converter 17c allows estimation of the catalyst bed temperature T_{c} with higher accuracy.

As described above, in the present embodiment, a catalyst bed temperature T_{C} is estimated based on an exhaust gas temperature T_{E} and a flow rate of exhaust gas, but it is also possible to incorporate a catalyst temperature sensor for directly detecting a bed temperature T_{C} of the NSR catalytic converter 17c to the NSR catalytic converter 17c. Needless to say, the exhaust gas temperature sensor 27 is not needed in this case.

The exhaust gas heating device 26 located in the exhaust passage 25a upstream of the exhaust gas purifier 17 heats the exhaust gas flowing from the engine 10 to the exhaust gas purifier 17 and serves for prompt activation of the exhaust gas purifier 17 and for maintaining the exhaust gas purifier 17 in an active state. The exhaust gas heating device 26 of the present embodiment includes a fuel supply valve 26a and an exhaust glow plug 26b as a first glow plug according to the present invention.

The fuel supply valve 26a has the same basic configuration as that of the normal fuel injection valve 11. The fuel supply valve 26a is designed to freely supply an arbitrary amount of fuel to the exhaust passage 25a at arbitrary time intervals in a pulse fashion by controlling an energization time. A fuel supply setting section 13h in the ECU 13 sets an amount of fuel supplied each time from the fuel supply valve 26a to the exhaust passage 25a based on operating states of the vehicle including an intake air amount and the like. Information on the intake air amount can be acquired on the basis of an output from the airflow meter 23. More specifically, the fuel supply setting section 13h calculates an amount of fuel to be supplied to the exhaust passage 25a based on a difference between a target catalyst heat temperature T_{CH} as set higher than the catalyst warm-up start determination temperature T_{CL} and a catalyst temperature T_{C} estimated from a current exhaust gas temperature T_{E} detected by the exhaust gas temperature sensor 27. An injection cycle of fuel from the fuel supply valve 26a is set such that the fuel has a predetermined air-fuel ratio based on the information on the intake air amount from the airflow meter 23.

A fuel supply valve driving section 13i in the ECU 13 controls the drive period and drive cycle of the fuel supply valve 26a in such a manner that the fuel in the amount set in the fuel supply setting section 13h has a predetermined air-fuel ratio. In this case, the fuel supply valve 26a is kept actuated until the fuel supply amount accumulated after the start of the fuel supply reaches a fuel supply amount set in the fuel supply setting section 13h.

The exhaust glow plug 26b as a second glow plug of the present invention for igniting the fuel supplied from the fuel supply valve 26a to the exhaust passage 25a is connected to a power source (not shown) mounted on a vehicle via a warm-up determining section 13d and an exhaust glow plug driving section 13j in the ECU 13.

Usually, if the exhaust gas purifier 17 needs to be warmed, at a time when the engine 10 turns to the operating state in which the fuel is supplied from the fuel supply valve 26a to the exhaust passage 25a and the fuel is to be ignited and burned by the exhaust glow plug 26b, energization of the exhaust glow plug 26b starts. Then, after the temperature of a heating portion of the exhaust glow plug 26b increases and becomes equal to or higher than a temperature T_{GO} at which the fuel supplied from the fuel supply valve 26a to the exhaust passage 25a can stably ignite and burn (hereinafter referred to as a target glow plug heat temperature), the fuel is supplied from the fuel supply valve 26a to the exhaust passage 25a.

However, if the warm-up determining section 13d determines that the engine 10 and the exhaust gas purifier 17 need to be warmed at the same time, warm-up processing is performed first on the engine 10. Then, at a time when a catalyst temperature T_{C} increases and becomes equal to or higher than a temperature T_{CH} which is a little lower than a general temperature of exhaust gas flowing in the exhaust gas purifier 17 (hereinafter referred to as a glow plug energization starting temperature) at the time when the warm-up of the engine 10 is finished, warm-up processing of the exhaust gas purifier 17 starts by using the exhaust gas heating device 26. More specifically, following the warm-up processing of the engine 10, warm-up processing is performed on the exhaust gas purifier 17 by using the exhaust gas heating device 26, and after the warm-up processing of the engine 10 is finished, the warm-up processing of the exhaust gas purifier 17 by using the exhaust gas heating device 26 is finished.

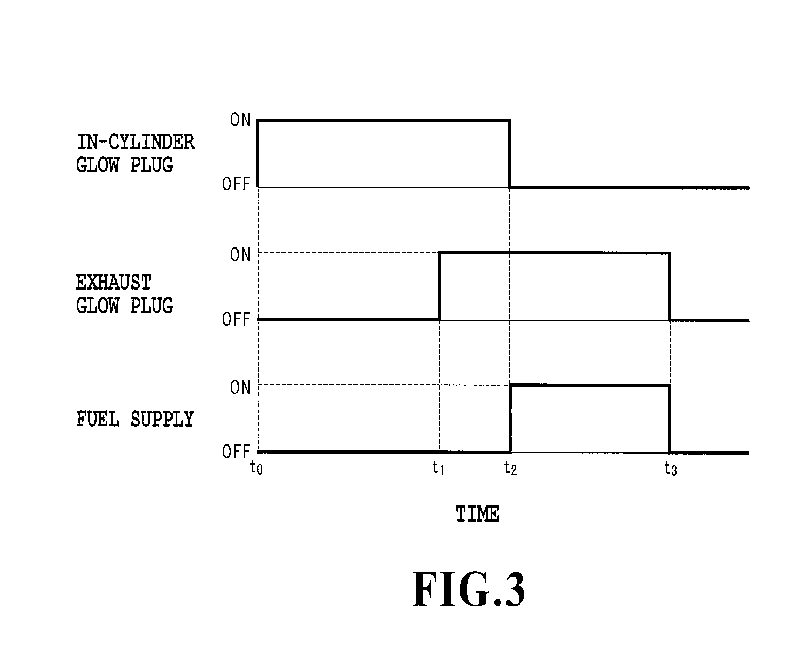

The control procedure will schematically be explained with reference to Fig. 3. At a time to, the in-cylinder glow plug 16 is turned on to warm up the engine 10, and warm-up processing is performed on the engine 10. Then, at a time t₁ when a catalyst temperature T_{C} reaches a glow plug energization starting temperature T_{CM}, the exhaust glow plug 26b is turned on to warm up the exhaust gas purifier 17 by using the exhaust gas heating device 26. Then, at a time t₂ when the exhaust glow plug 26b reaches a target glow plug heat temperature T_{GO}, the in-cylinder glow plug 16 is turned off and the warm-up processing of the engine 10 is finished. At the same time, fuel begins to be supplied from the fuel supply valve 26a to the exhaust passage 25a, and the exhaust gas purifier 17 is warmed by using the exhaust gas heating device 26 until a time t₃ when the catalyst temperature T_{C} reaches the target catalyst heat temperature T_{CH}. From the time t₁ to the time t₂, power is supplied to the two glow plugs 16 and 26b at the same time. Needless to say, this changes depending on the operating state of the vehicle.

Accordingly, the glow plug energization starting temperature T_{CM} in the above-described present embodiment corresponds to an exhaust glow plug heating start determination temperature in the present invention, and the warm-up determining section 13d serves also as an exhaust glow plug energization start determination means for determining an energization start time for the exhaust glow plug 26b.

The reason why the above control is performed will be explained. That is, immediately after the cold start of the engine 10, the DOC 17a and the NSR catalytic converter 17c that are incorporated into the exhaust gas purifier 17 are in a non-active state. Accordingly, it is preferable to reduce the amount of HC and CO included in exhaust gas at the engine 10 side. If the warm-up of the engine 10 proceeds and the temperature of the exhaust gas flowing in the exhaust passage 25a increases, it becomes better to clean the exhaust gas by using the exhaust gas purifier 17 in terms of fuel efficiency. In this case, if the in-cylinder glow plug 16 is kept energized, power consumption increases, and as a result, the fuel efficiency decreases. Accordingly, the exhaust glow plug 26b is turned on at a time when the glow plug energization starting temperature T_{CM} increases to about 100°C, for example, and the in-cylinder glow plug 16 is turned off at a time when the water temperature T_{W} increases to 80°C or higher. Accordingly, it is possible to suppress power consumption while efficiently performing the warm-up.

It should be noted that as an intake air amount detected by the airflow meter 23 increases, that is, as a flow rate of exhaust gas increases, the heating portion of the exhaust glow plug 26b is cooled strongly, and ignition quality of fuel decreases. Therefore, in the present embodiment, as a flow rate of exhaust gas increases, the above glow plug energization starting temperature T_{CH} is corrected to a higher point so that the actuation of the exhaust gas heating device 26 is delayed. That is, the airflow meter 23 of the present embodiment serves also as an exhaust flow acquisition means for acquiring a flow rate of exhaust gas flowing in the exhaust passage 25a.

To the exhaust glow plug 26b, a well-known glow plug temperature sensor 28 for detecting the temperature of the heating portion, which is outputted to the ECU 13, is incorporated. The exhaust glow plug driving section 13j controls an electricity supply to the exhaust glow plug 26b based on detection information from the glow plug temperature sensor 28 so that the temperature of the exhaust glow plug 26b increases to the target glow plug heat temperature T_{GO} or higher.

The operating state determining section 13a in the ECU 13 determines whether or not the engine 10 is in the operating state in which the fuel is supplied from the fuel supply valve 26a to the exhaust passage 25a and the fuel is to be ignited and burned by the exhaust glow plug 26b. The operating state includes general idle operation in which an accelerator opening degree is 0% and low-speed low-load operation of the engine 10. In other words, the operating state determining section 13a determines that the engine 10 is in the operating state in which the fuel is supplied to the exhaust passage 25a and the fuel is to be ignited and burned in a case where an opening degree detected by the accelerator opening sensor 14 is, for example, 5% or less and an engine rotational speed is a preset value or lower.

The ECU 13 is a well-known one-chip microprocessor and includes a CPU, a ROM, a RAM, a nonvolatile memory, an I/O interface, and the like which are connected to each other by a data bus (not shown). This ECU 13 performs predetermined arithmetic processing on the basis of the detection signals from the above-mentioned sensors 14, 19, 24, 27, and 28, airflow meter 23, and the like so that the engine 10 can operate smoothly. Moreover, the ECU 13 controls the actuations of the fuel injection valve 11, the in-cylinder glow plug 16, the throttle actuator 21, the fuel supply valve 26a, the exhaust glow plug 26b, and the like in accordance with a preset program.

The intake air supplied into the combustion chamber 10a through the intake passage 20a form an air-fuel mixture together with the fuel injected into the combustion chamber 10a from the fuel injection valve 11. Then, normally, the air-fuel mixture undergoes spontaneous ignition and combustion immediately before the piston 18b reaches top dead center of the compression stroke. The resultant exhaust gas generated passes through the exhaust gas purifier 17 and is released in a detoxified state into the atmosphere through the exhaust pipe 25.

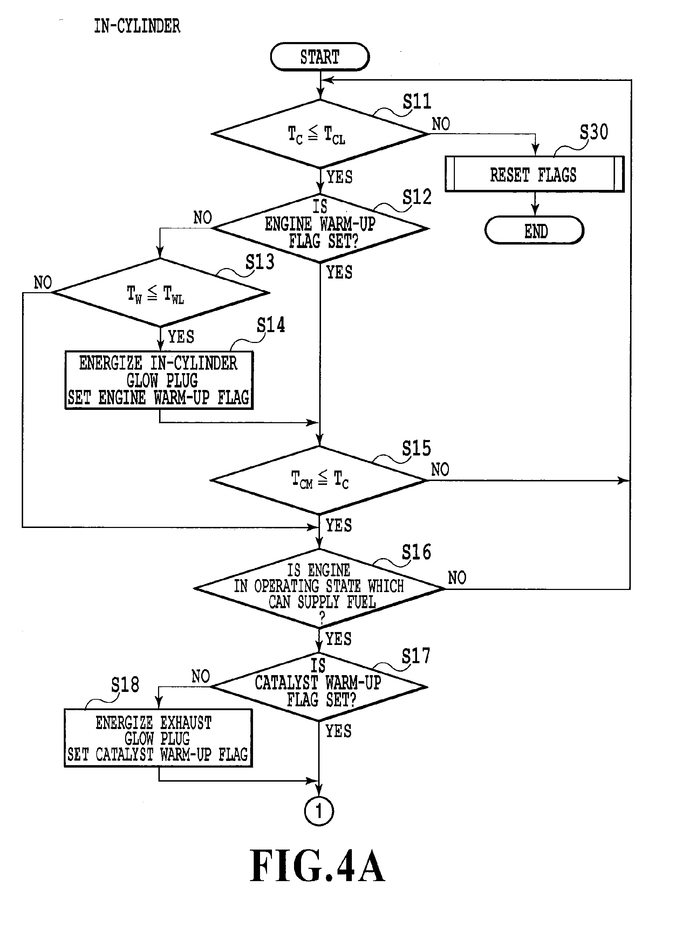

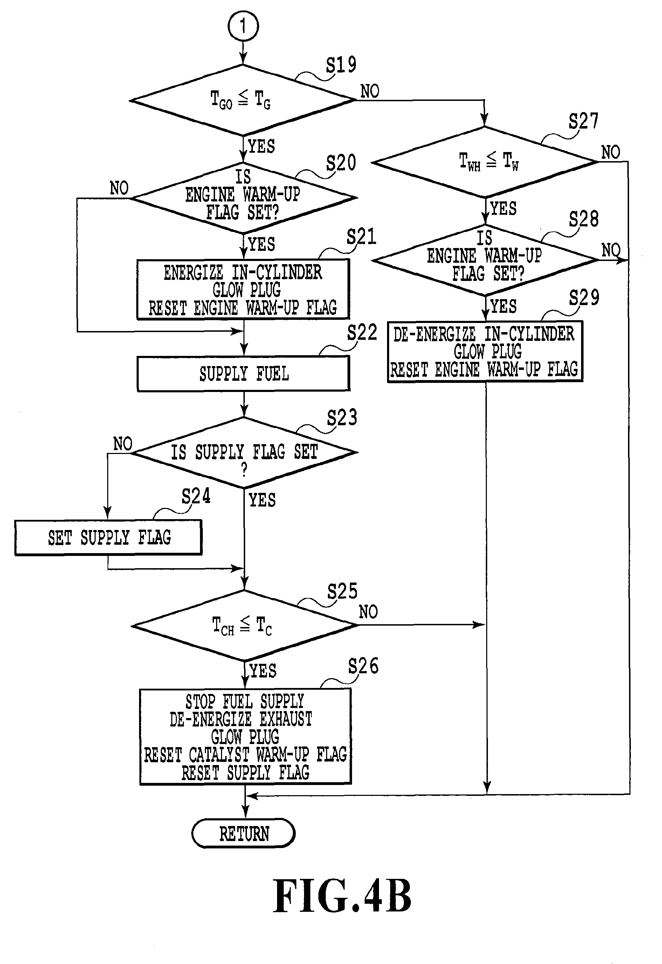

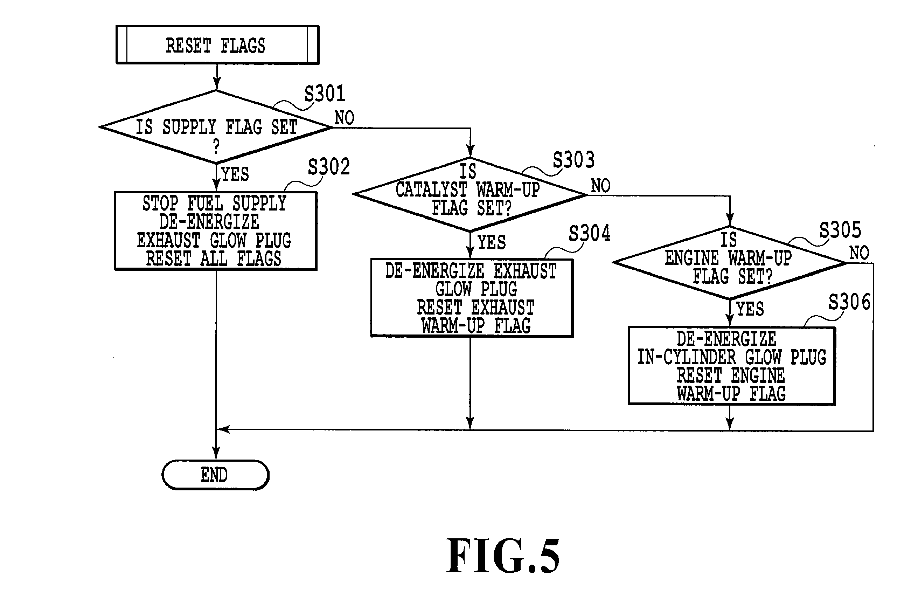

The catalyst warm-up procedure according to the above present embodiment will be described with reference to the flow charts shown in Figs. 4A, 4B, and 5.

First in step S11, it is determined whether a catalyst temperature T_{C} estimated based on the exhaust gas temperature T_{E} detected by the exhaust gas temperature sensor 27 is equal to or lower than the above warm-up start determination temperature T_{CL}. If it is determined that the catalyst temperature T_{C} is equal to or lower than the warm-up start determination temperature T_{CL}, that is, if it is determined that the exhaust gas purifier 17 needs to be heated for activation, the process proceeds to step S12 to determine whether an engine warm-up flag is set. Since an engine warm-up flag is not set at first, the process proceeds to step S13 to then determine whether a water temperature T_{W} detected by the water temperature sensor 19 is lower than the above warm-up necessity determination temperature T_{WL}. If it is determined that the water temperature T_{W} is lower than the warm-up necessity determination temperature T_{WL}, that is, if it is determined that the engine 10 needs to be warmed, the process proceeds to step S14. Then, the in-cylinder glow plug 16 is turned on and after the in-cylinder glow plug 16 is heated while setting an engine warm-up flag, the process proceeds to step S15.

As described above, even in a state in which the exhaust gas purifier 17 needs to be warmed, if the engine 10 needs to be warmed at the same time, the in-cylinder glow plug 16 is turned on to first warm up the engine 10. As a result, as compared to the case where the exhaust gas heating device 26 is actuated, it is possible to suppress the amount of HC and CO included in exhaust gas emitted from the engine 10 in a low-temperature state to the exhaust passage 25a.

Also when it is determined that an engine warm-up flag is set in the above-mentioned step S12, the process proceeds to step S15, and it is determined whether a catalyst temperature T_{C} is equal to or higher than the above glow plug energization starting temperature T_{CM}. If it is determined that the catalyst temperature T_{C} is equal to or higher than the glow plug energization starting temperature T_{CM}, that is, if it is determined that heating of the exhaust gas by using the exhaust gas heating device 26 is effective, the process proceeds to step S16. Further, also when it is determined that the water temperature T_{W} is equal to or higher than the warm-up necessity determination temperature T_{WL} in the above-mentioned step S13, that is, also when it is determined that the engine 10 does not need to be warmed, the process proceeds to step S16.

In step S16, it is determined whether the engine is in an operating state in which can supply the fuel to the exhaust passage 25a and can ignite and burn the fuel. If it is determined that the engine is in an operating state which can supply the fuel to the exhaust passage 25a and can ignite and burn the fuel, the process proceeds to step S17 to determine whether a catalyst warm-up flag is set. Since a catalyst warm-up flag is not set at first, the process proceeds to step S18. Then, the exhaust glow plug 26b is turned on and after the exhaust glow plug 26b is heated while setting a catalyst warm-up flag, the process proceeds to step S19. Also when it is determined that a catalyst warm-up flag is set in the above-mentioned step S17, the process proceeds to step S19, and it is determined whether the temperature of the exhaust glow plug 26b being energized has increased and become equal to or higher than a target glow plug heat temperature T_{GO} at which the fuel is ignited and burned. If it is determined that a temperature T_{G} of the exhaust glow plug 26b is equal to or higher than the target glow plug heat temperature T_{GO}, that is, if it is determined that fuel can be supplied to the exhaust passage 25a, it is determined whether an engine warm-up flag is set in the above-mentioned step S20. If it is determined that an engine warm-up flag is set, the process proceeds to step S21. After the in-cylinder glow plug 16 is turned off and the engine warm-up flag is reset, the process proceeds to step S22. Also when an engine warm-up flag is not set in the above-mentioned step 20, the process proceeds to step S22, and the fuel begins to be supplied from the fuel supply valve 26a to the exhaust passage 25a. Accordingly, high-temperature exhaust gas resulting from igniting and heating the fuel is introduced to the exhaust gas purifier 17 to expedite warm-up of the exhaust gas purifier 17.

As described above, if the temperature T_{G} of the exhaust glow plug 26b is equal to or higher than the target glow plug heat temperature T_{GO}, the in-cylinder glow plug 16 is turned off so that emission of HC, CO, and the like included in exhaust gas is efficiently suppressed. In addition, it is also possible to suppress power consumption caused by energizing the two glow plugs 16 and 26b at the same time.

Following the above-mentioned step S22, it is determined whether a supply flag is set in step S23. Since a supply flag is not set at first, after a supply flag is set in step S24, the process proceeds to step S25. Also when it is determined that a supply flag is set in S23, the process proceeds to step S25, and it is determined whether the catalyst temperature T_{C} is equal to or higher than the target catalyst heat temperature T_{CH}. If it is determined that the catalyst temperature T_{C} is equal to or higher than the target catalyst heat temperature T_{CH}, that is, if it is determined that the warm-up of the exhaust gas purifier 17 is finished, the process proceeds to step 526. The supply of the fuel from the fuel supply valve 26a is stopped and the exhaust glow plug 26b is turned off. At the same time, after both of the catalyst warm-up flag and the supply flag are reset, the process returns to step S11 and the above processing is repeated.

If it is determined that the catalyst temperature T_{C} is lower than the target catalyst heat temperature T_{CH} in the above-mentioned step S25, that is, if it is determined that the supply of the fuel from the fuel supply valve 26a needs to be continued, the process returns to step S11, and the above processing is repeated.

Meanwhile, if it is determined that the temperature T_{G} of the exhaust glow plug 26b is lower than the target glow plug heat temperature T_{GO} in the above-mentioned step S19, that is, if it is determined that the supply of the fuel from the exhaust passage 25a cannot continuously cause the fuel to ignite and burn, the process proceeds to step S27. Then, it is determined whether the water temperature T_{W} is equal to or higher than the warm-up completion determination temperature T_{WH}. If it is determined that the water temperature T_{W} is equal to or higher than the warm-up completion determination temperature T_{WH}, that is, if it is determined that the warm-up of the engine 10 is complete, the process proceeds to step S26a. Here, it is determined whether an engine warm-up flag is set. If it is determined that an engine warm-up flag is set, the process proceeds to step S29. After the in-cylinder glow plug 16 is turned off and the engine warm-up flag is reset, the process returns to step S11.

If it is determined that the water temperature T_{W} is lower than the warm-up completion determination temperature T_{WH} in step S27, that is, if it is determined that the warm-up of the engine 10 is not complete, the process returns to step S11, and the above processing is repeated. In the same manner, also when it is determined that an engine warm-up flag is not set in S26a, the process returns to step S11.

In the above-mentioned step S16, if it is determined that the engine is not in an operating state which can supply the fuel to the exhaust passage 25a and can ignite the fuel, the process returns to step S11, and the above processing is repeated. In the same manner, also when it is determined that the catalyst temperature T_{C} is lower than the glow plug energization starting temperature T_{CM} in step S15, that is, also when it is determined that rather than actuating the exhaust gas heating device 26, HC and CO are effectively reduced by using the in-cylinder glow plug 16, the process returns to step S11.

Meanwhile, if it is determined that the catalyst temperature T_{C} is higher than the warm-up start determination temperature T_{CL} in the above-mentioned step S11, that is, if it is determined that warm-up processing of the exhaust gas purifier 17 is not needed, the process proceeds to subroutines for resetting flags in step S30.

Details of the subroutines are shown in Fig. 5. First, it is determined whether a supply flag is set in step S301. If it is determined that a supply flag is set, the supply of the fuel from the fuel supply valve 26a is finished in step S302 and the exhaust glow plug 26b is turned off. Furthermore, all of the set flags (engine warm-up flag, catalyst warm-up flag, and supply flag) are reset and the processing is finished.

If it is determined that a supply flag is not set in step S301, the process proceeds to step S303, and now it is determined whether a catalyst warm-up flag is set. If it is determined that a catalyst warm-up flag is set, the process proceeds to step S304. Then, the exhaust glow plug 26b is turned off while resetting the catalyst warm-up flag, and the processing is finished.

If it is determined that the catalyst warm-up flag is reset in step S303, the process proceeds to step S305, and it is determined whether an engine warm-up flag is set. If it is determined that an engine warm-up flag is set, the process proceeds to step S306, the in-cylinder glow plug 16 is turned off while resetting the engine warm-up flag, and the processing is finished.

It should be noted that, the present invention should be interpreted based only upon the matters described in claims, and in the aforementioned embodiments, all changes and modifications included within the spirit of the present invention can be made other than the described matters. That is, all the matters in the described embodiments are made not to limit the present invention, but can be arbitrarily changed according to the application, the object and the like, including every configuration having no direct relation to the present invention.

### Reference Signs List

- 10: engine
- 10a: combustion chamber
- 11: fuel injection valve
- 13: ECU
- 13a: operating state determining section
- 13d: warm-up determining section
- 13e: in-cylinder glow plug driving section
- 13i: fuel supply valve driving section
- 13j: exhaust glow plug driving section
- 16: in-cylinder glow plug
- 17: exhaust gas purifier
- 17c: NSR catalytic converter
- 19: water temperature sensor
- 23: airflow meter
- 25: exhaust pipe
- 25a: exhaust passage
- 26: exhaust gas heating device
- 26a: fuel supply valve
- 26b: exhaust glow plug
- 27: exhaust gas temperature sensor
- 28: glow plug temperature sensor
- T_{W}: water temperature
- T_{WL}: warm-up necessity determination temperature
- T_{WH}: warm-up completion determination temperature
- T_{C}: catalyst temperature
- T_{CL}: warm-up start determination temperature
- T_{CH}: target catalyst heat temperature
- T_{GO}: target glow plug heat temperature
- T_{CM}: glow plug energization starting temperature

## Claims

1. An operation control apparatus for an internal combustion engine, the apparatus comprising:
a fuel injection valve for injecting fuel into a combustion chamber of a compression ignition type internal combustion engine;
a first glow plug disposed in the combustion chamber of the internal combustion engine to expedite ignition and burning of the fuel injected into the combustion chamber from the fuel injection valve;
an engine warm-up parameter acquisition means for acquiring a parameter associated with whether the internal combustion engine needs to be warmed;
an engine warm-up determination means for determining whether the internal combustion engine needs to be warmed by comparing the parameter acquired by the engine warm-up parameter acquisition means and a preset engine warm-up determination parameter;
an exhaust gas purifier disposed in an exhaust passage into which exhaust gas from the internal combustion engine is introduced;
a fuel supply valve for supplying fuel to the exhaust passage upstream of the exhaust gas purifier;
a second glow plug disposed in the exhaust passage downstream of the fuel supply valve to cause the fuel supplied from the fuel supply valve to the exhaust passage to ignite and burn;
a catalyst temperature acquisition means for acquiring a temperature of a catalytic converter incorporated into the exhaust gas purifier;
a catalyst warm-up determination means for determining whether the catalytic converter needs to be warmed by comparing the temperature of the catalytic converter acquired by the catalyst temperature acquisition means and a preset catalyst warm-up determination temperature; and
a control means for controlling each of an actuation of the fuel injection valve, an actuation of the fuel supply valve, a period of time in which the first glow plug is energized, and a period of time in which a second glow plug is energized based on determination results obtained by the engine warm-up determination means and the catalyst warm-up determination means,
wherein the engine warm-up determination parameter is set in a manner corresponding to a temperature lower than the catalyst warm-up determination temperature so that if it is determined that both of the engine warm-up determination means and the catalyst warm-up determination means need to be warmed, the energization of the first glow plug starts prior to the energization of the second glow plug;
the control means includes a second glow energizing start determination means for determining an energization start time of the second glow plug by comparing the temperature of the catalytic converter acquired by the catalyst temperature acquisition means and a preset second glow plug heating start determination temperature; and
the second glow plug heating start determination temperature is set in a manner corresponding to a temperature higher than the engine warm-up determination parameter and lower than the catalyst warm-up determination temperature.

2. The operation control apparatus for an internal combustion engine according to claim 1, further comprising:
a second glow plug temperature acquisition means for acquiring a temperature of the second glow plug, wherein the control means finishes the energization of the first glow plug if the engine warm-up determination means determines that the warm-up of the internal combustion engine is finished or if the temperature of the second glow plug acquired by the second glow plug temperature acquisition means is equal to or higher than a fuel ignition temperature.

3. The operation control apparatus for an internal combustion engine according to claim 1 or 2, further comprising:
an exhaust flow acquisition means for acquiring a flow rate of exhaust gas flowing in the exhaust passage, wherein the control means further includes a means for correcting the second glow plug heating start determination temperature to a higher point so that as the flow rate of the exhaust gas acquired by the exhaust flow acquisition means increases, an energization start time of the second glow plug is delayed.

4. An operation control method for an internal combustion engine, the method comprising the steps of:
(a) acquiring a parameter associated with whether an internal combustion engine needs to be warmed;
(b) determining whether the internal combustion engine needs to be warmed by comparing the parameter acquired in the step (a) and a preset engine warm-up determination parameter;
(c) heating a first glow plug disposed in a combustion chamber of the internal combustion engine to a predetermined temperature if it is determined that the internal combustion engine needs to be warmed in the step (b);
(d) injecting fuel into the combustion chamber to cause the fuel to ignite and burn if the temperature of the first glow plug is equal to or higher than the predetermined temperature;
(e) acquiring a temperature of a catalytic converter of an exhaust gas purifier disposed in an exhaust passage into which exhaust gas from the internal combustion engine is introduced;
(f) determining whether the catalytic converter needs to be warmed by comparing the temperature of the catalytic converter acquired in the step (e) and a preset catalyst warm-up determination temperature;
(g) heating a second glow plug disposed in the exhaust passage upstream of the exhaust gas purifier if it is determined that the catalytic converter needs to be warmed in the step (f); and
(h) injecting fuel into the exhaust passage to cause the fuel to ignite and burn by using the second glow plug if the temperature of the second glow plug is equal to or higher than a fuel ignition temperature,
wherein if it is determined that a warm-up is needed in both of the steps (b) and (f), the engine warm-up determination parameter is set in a manner corresponding to a temperature lower than the catalyst warm-up determination temperature so that the steps (c) and (d) are performed prior to the steps (g) and (h); and
the step (g) includes determining a start time of the heating of the second glow plug by comparing the temperature of the catalytic converter acquired in the step (e) and a preset second glow plug heating start determination temperature, the second glow plug heating start determination temperature being set in a manner corresponding to a temperature higher than the engine warm-up determination parameter and lower than the catalyst warm-up determination temperature.

5. The operation control method for an internal combustion engine according to claim 4, wherein the step (c) ends if a determination result in the step (b) is that the warm-up of the internal combustion engine is finished or if the temperature of the second glow plug is equal to or higher than a fuel ignition temperature in the step (g).

6. The operation control method for an internal combustion engine according to claim 4 or 5, wherein the step (c) ends after the step (h) starts.

7. The operation control method for an internal combustion engine according to any one of claims 4 to 6, further comprising the steps of:
acquiring a flow rate of exhaust gas flowing in the exhaust passage; and
correcting the second glow plug heating start determination temperature to a higher point so that as the flow rate of the exhaust gas acquired in the step (i) increases, a heating start time of the second glow plug determined in the step (g) is delayed.
